# EUROPEAN PATENT SPECIFICATION

(11) **EP 2 485 338 B1**
(45) Date of publication and mention of the grant of the patent: **20.04.2016**
(21) Application number: 11010288.6
(22) Date of filing: 29.12.2011
(51) Int. Cl.: H01R 13/52, B60L 11/18

(54) **Charging connector and method of mounting it**
Ladestecker und Verfahren zu dessen Montage
Connecteur de chargement et son procédé de montage

(30) Priority: 04.02.2011 JP 2011023129
(43) Date of publication of application: 08.08.2012
(60) Divisional application: 13000199.3
(73) Proprietor: Sumitomo Wiring Systems, Ltd., Yokkaichi-city, Mie 510-8503 (JP)
(72) Inventor: Ichio, Toshifumi, Yokkaichi-City Mie 510-8503 (JP)
(74) Representative: Müller-Boré & Partner Patentanwälte PartG mbB

(56) References cited:
- EP-A1- 0 715 373
- WO-A1-2010/060370
- JP-A- 6 290 831
- US-B1- 6 183 274

## Description

The present invention relates to a charging connector which is connected to a vehicle-side connector provided in a vehicle to charge a battery installed in the vehicle, and to a method of mounting or connecting it.

A charging connector disclosed in Japanese Unexamined Patent Publication No. H06-290831 is, for example, known as a charging connector of this type. This includes a connector connecting portion connectable to a vehicle-side connector. Such a connector connecting portion is provided in a front end portion of a case body, and a cable connected to a power supply is drawn out from a lower part at the rear end of the case body. A plurality of terminal fittings such as a power supply terminal for supplying power from the power supply to the vehicle-side connector are provided in the connector connecting portion, and these terminal fittings are arranged to be located at the front side of the case body so as to be connectable to vehicle-side terminals provided in the vehicle-side connector. Further, the case body includes a protection cap to be mounted on the connector connecting portion.

However, the above protection cap is attached to a grip portion of the case body via a belt and a hook for catching the belt is provided on the grip portion. In such a case, since a part of the grip portion where the hook is provided cannot be held, the grip portion needs to include a part to be held in addition to the part where the hook is provided. This makes the grip portion larger, causing poor appearance and, in addition, enlarges the charging connector.

EP 0 715 373 A1 discloses an electrical connector having connector cap supported by flexible electrical cable connected to the electrical connector.

The present invention was completed in view of the above situation and an object thereof is to enable mounting of a protection cap without enlarging a charging connector.

This object is solved according to the invention by the features of the independent claims. Particular embodiments of the invention are subject of the dependent claims.

According to one aspect of the invention, there is provided a charging connector which is to be connected in a mounting direction to a vehicle-side connector provided in a vehicle to provide current particularly for charging a battery installed in the vehicle, comprising: a case body with a connecting portion connectable to the vehicle-side connector; a protection cap made of an insulating material and mountable on the connecting portion disconnected or separated from the vehicle-side connector; and a cable drawn out from the interior of the case body to be connected to a power supply, wherein the protection cap is removable from the connecting portion and attachable to the cable when connecting the connecting portion to the vehicle-side connector, wherein the protection cap includes a facing wall and a peripheral wall extending from the facing wall, wherein when the protection cap is mounted on the charging connector, the facing wall is facing and covering the connecting portion and the peripheral wall extends from the facing wall opposite to the mounting direction along the outer surface of the connecting portion, wherein an end edge of the peripheral wall is cut off to form at least one mounting groove, and the mounting groove is formed to surround the cable over more than about half the circumference.

According to a particular embodiment, there is provided a charging connector which is connected to a vehicle-side connector provided in a vehicle to charge a battery installed in the vehicle, comprising a case body with a connecting portion connectable to the vehicle-side connector; a protection cap made of an insulating material and to be mounted on the connecting portion disconnected or separated from the vehicle-side connector; and a cable drawn out from the interior of the case body to be connected to a power supply, wherein the protection cap is removed from the connecting portion and attached to the cable in connecting the connecting portion to the vehicle-side connector.

According to the above, since the protection cap removed from the connecting portion can be attached to the cable, it is not necessary to provide the case body with an attaching portion used to attach the protection cap and enlarge the charging connector. Further, since the protection cap can be attached to the cable, damage of a vehicle body such as due to the contact of the protection cap with the vehicle body can be prevented.

The present invention is preferably embodied to have the following constructions.

The protection cap includes a facing wall facing the connecting portion in a mounting direction to cover the connecting portion and a peripheral wall extending from the peripheral edge of the facing wall in the mounting direction along the outer surface of the connecting portion; an end edge of the peripheral wall is cut off to form a mounting groove; and the mounting groove is formed to surround the cable over more than half the circumference.

According to the above, the protection cap can be attached to the cable by being held in the mounting groove.

The connecting portion includes a power supply terminal for supplying power and at least one separation wall extending from a facing surface of the facing wall substantially opposite to the mounting direction to separate the power supply terminal from another terminal.

The peripheral wall is formed with a pair of mounting grooves substantially facing each other; and the separation wall extends along the cable mounted between the pair of mounting grooves.

The connecting portion may include a power supply terminal for supplying power and a separation wall extending from a facing surface of the facing wall in the mounting direction to separate the power supply terminal from another terminal; the peripheral wall may be formed with a pair of mounting grooves facing each other; and the separation wall may extend along the cable mounted between the pair of mounting grooves.

According to the above, the protection cap can be more strongly attached to the cable since the cable can also be engaged with the separation wall as well as the both mounting grooves.

One or more parts of the mounting grooves in the protection cap may be reinforced by a straight part of the separation wall.

During a removing operation, parts of the protection cap between peripheral edges of the mounting grooves and the facing wall may be resiliently deformed to widen opening parts of the mounting grooves.

The charging connector may further comprise a lock portion for locking the vehicle-side connector and the connecting portion in a connected state.

A dimension of a first side of the peripheral wall along the mounting direction may be smaller than a dimension of a second side thereof in the mounting direction.

Two terminal fittings may be provided as power supply terminals and the cap comprises an intermediate wall to be at least partly inserted between the two power supply terminal fittings.

According to another aspect of the invention, there is provided a method of mounting or connecting a charging connector, in particular according to the previous aspect of a particular embodiment thereof, to a vehicle-side connector provided in a vehicle to provide current particularly for charging a battery installed in the vehicle, comprising the following steps: mounting a protection cap made of an insulating material on a connecting portion of a case body when separated from the vehicle-side connector; and before or when connecting the connecting portion to the vehicle-side connector in a mounting direction, removing the protection cap from the connecting portion and attaching the protection cap to a cable drawn out from the interior of the case body to be connected to a power supply, wherein the protection cap includes a facing wall and a peripheral wall extending from the facing wall, wherein when the protection cap is mounted on the charging connector, the facing wall is facing and covering the connecting portion and the peripheral wall extends from the facing wall opposite to the mounting direction along the outer surface of the connecting portion, wherein the method includes the steps of cutting off an end edge of the peripheral wall so as to form at least one mounting groove, and forming the mounting groove so as to surround the cable over more than about half the circumference.

According to the above, it is possible to enable mounting of a protection cap without enlarging a charging connector.

These and other objects, features and advantages of the present invention will become more apparent upon reading of the following detailed description of preferred embodiments and accompanying drawings. It should be understood that even though embodiments are separately described, single features thereof may be combined to additional embodiments.
FIG. 1 is a side view showing a state where a protection cap is mounted on a connecting portion in a first embodiment,
FIG. 2 is a side view showing a state where the protection cap is attached to a cable,
FIG. 3 is a side view showing the internal structures of the protection cap and the connecting portion in FIG. 1,
FIG. 4 is a bottom view showing the state where the protection cap is mounted on the connecting portion,
FIG. 5 is a bottom view showing the state where the protection cap is attached to the cable,
FIG. 6 is a front view showing the state where the protection cap is mounted on the connecting portion,
FIG. 7 is a section showing a state of mounting the protection cap on the connecting portion,
FIG. 8 is a side view showing a state of removing the protection cap from the connecting portion,
FIG. 9 is a plan view of the protection cap,
FIG. 10 is a bottom view of the protection cap,
FIG. 11 is a side view of the protection cap,
FIG. 12 is a front view of the protection cap,
FIG. 13 is a rear view of the protection cap,
FIG. 14 is a section along A-A of FIG. 13,
FIG. 15 is a rear view showing a state where a protection cap is mounted on a connecting portion in a first comparative example,
FIG. 16 is a perspective view showing the state where the protection cap is mounted on the connecting portion when obliquely viewed from front,
FIG. 17 is a plan view of the protection cap,
FIG: 18 is a side view of the protection cap,
FIG. 19 is a section corresponding to FIG. 3 in the first comparative example, FIG. 20 is a rear view of the protection cap,
FIG. 21 is a front view of the protection cap,
FIG. 22 is a rear view showing a state where a protection cap is attached to a cable in a second comparative example,
FIG. 23 is a perspective view showing a state where the protection cap is attached to the cable when obliquely viewed from front,
FIG. 24 is a plan view of the protection cap,
FIG. 25 is a side view of the protection cap,
FIG. 26 is a section corresponding to FIG. 3 in the second comparative example,
FIG. 27 is a rear view of the protection cap,
FIG. 28 is a front view of the protection cap,
FIG. 29 is a rear view of a protection cap in a second embodiment, and
FIG. 30 is a front view showing a state where a pair of terminal fittings located in an upper row are electrically insulated by an intermediate wall.

### <First Embodiment>

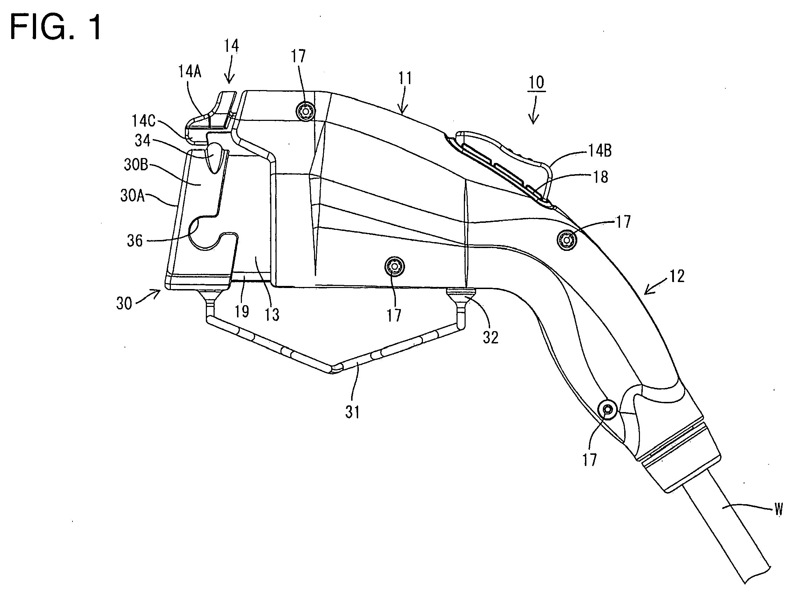

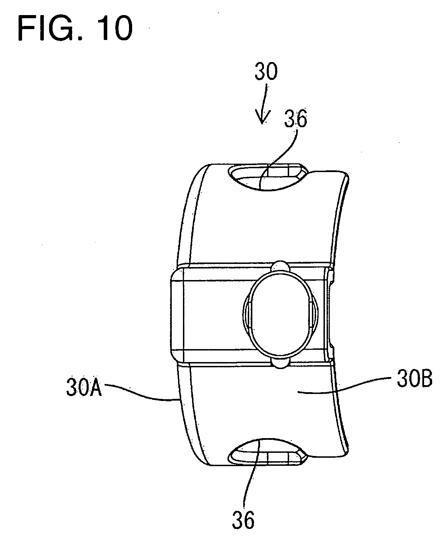

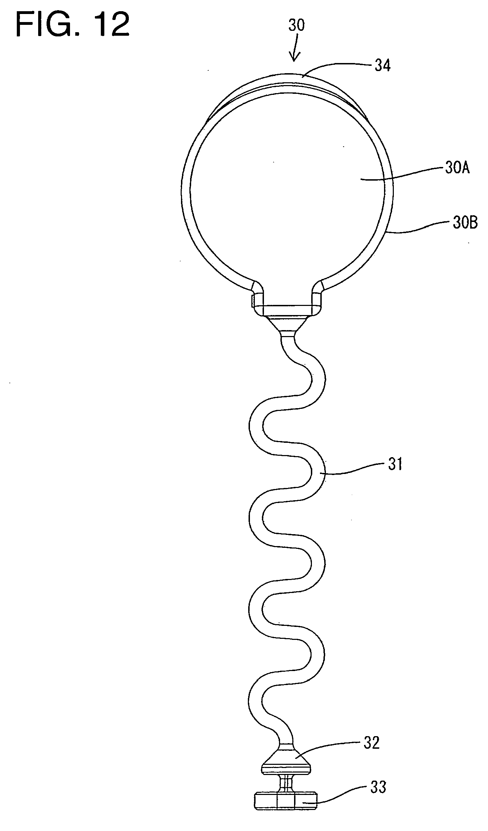

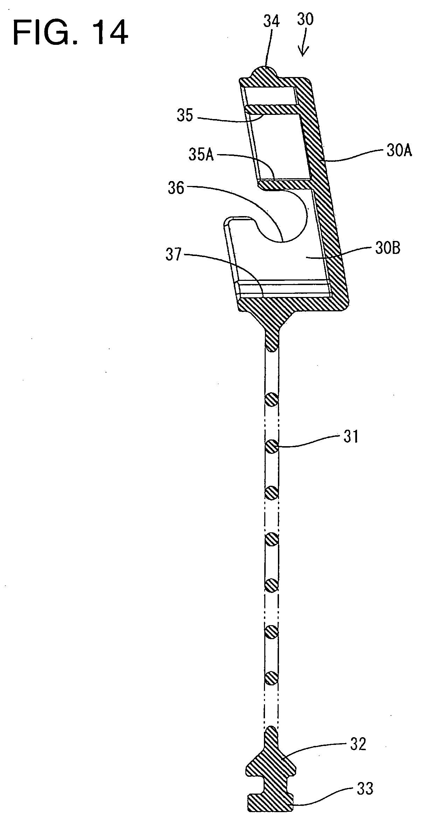

A first particular embodiment of the present invention is described with reference to FIGS. 1 to 14. As shown in FIG. 1, a charging connector 10 in this embodiment substantially is pistol-shaped (gun-shaped) as a whole and includes a connector main body 11 constituting or forming part of a substantially front portion (particularly half part) and a grip 12 extending obliquely downward from a rear end portion of this connector main body 11. The connector main body 11 and the grip 12 are integrally or unitarily molded, both made e.g. of synthetic resin, and particularly assembled by uniting a pair of half case bodies and fixing them using a plurality of bolt fastening portions 17. Note that a "case body" particularly corresponds to the connector main body 11 and the grip 12.

A (particularly substantially cylindrical or tubular) connecting portion 13 substantially projecting forward is mounted at or near a front end portion of the connector main body 11. A lever 14 is housed in or on (particularly an upper side of the interior of) the connector main body 11, and a lock portion 14A provided at or near a front end portion of the lever 14 substantially projects forward from the connector main body 11 to be located outside. This lock portion 14A includes a claw portion 14C projecting at an angle different from 0° or 180°, preferably substantially orthogonal with respect to the lock portion 14A or downward. On the other hand, an unlocking portion 14B for unlocking the lever 14 is provided at or near a rear end portion of the lever 14. This unlocking portion 14B projects to the outside of the connector main body 11 through an insertion hole 18 formed in (particularly the rear end of the upper surface of) the connector main body 11.

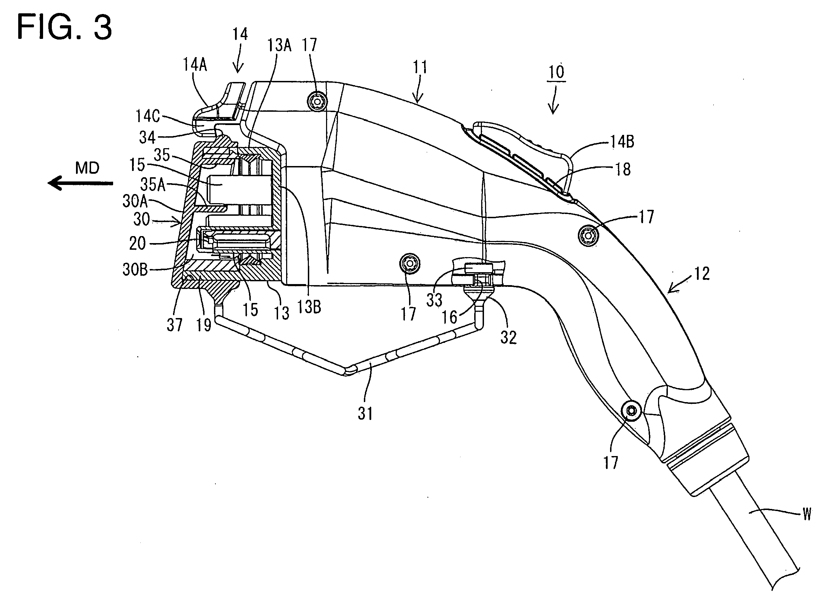

The connecting portion 13 particularly is formed as a member separate from the connector main body 11 and fixed to the connector main body 11 by an unillustrated locking means. This connecting portion 13 includes a receptacle 13A which is open forward, and one or more. Particularly a plurality of (particularly substantially cylindrical) terminal accommodating portions 15 project forward from a back wall 13B of this receptacle 13A as shown in FIG. 3. These terminal accommodating portions 15 particularly are covered over the substantially entire circumferences by the receptacle 13A. One or more cavities for at least partly accommodating terminal fittings 20 are formed in the terminal accommodating portion(s) 15.

One or more, particularly a plurality of terminal fittings 20 are provided in one or more stages and particularly are composed of a terminal fitting 20 in an upper or first row and that in a lower or second row, wherein the terminal fitting 20 in the upper or first row particularly is a power supply terminal for supplying power and/or that in the lower or second row particularly is a signal terminal for transmitting and receiving electrical signals. A cable W is drawn out from an end portion of the grip 12, wherein one end of the cable W is connected to a power supply and, on the other hand, the other end thereof is connected to the terminal fitting 20 particularly in the upper or first row. In this way, the charging connector 10 of this embodiment is or can be connected to a vehicle-side connector (not shown) provided in a vehicle, and the terminal fitting 20 in the upper or first row is to be connected to a vehicle-side terminal fitting (not shown) provided in the vehicle-side connector to provide current to circuits provided therein e.g. to charge a battery (not shown) installed in the vehicle.

A protection cap 30 made of an insulating material is mounted on or to the connecting portion 13, and the terminal fittings 20 are protected in a state electrically insulated from the outside by this protection cap 30. The material of the protection cap 30 is preferably flexible elastomer having a rubber hardness of more than about 30, particularly of about 40. A rubber or resilient or flexible string 31 is integrally or unitarily molded to the protection cap 30, and the protection cap 30 is connected or connectable to the connector main body 11 by this rubber string 31. This enables the protection cap 30 and the connector main body 11 to be handled as an integral assembly and prevents the protection cap 30 from being separated from the connector main body 11.

An end portion of the rubber string 31 includes a holding portion 32 for holding the end portion of the rubber string 31 onto the connector main body 11 particularly by being fitted into a water drain hole 16 formed to penetrate through (particularly a rear part of the lower surface of) the connector main body 11. A part of the holding portion 32 at least partly accommodated in the connector main body 11 serves as a retaining piece 33 particularly substantially in the form of a flat plate having a diameter larger than the hole diameter of the water drain hole 16 as shown in FIG. 3. Note that although the holding portion 32 is held and retained by assembling the connector main body 11 with the retaining piece 33 fitted in the water drain hole 16 in advance in this embodiment, the retaining piece may be formed to have a tapered shape so as to be insertable into the water drain hole 16 after the connector main body 11 is assembled.

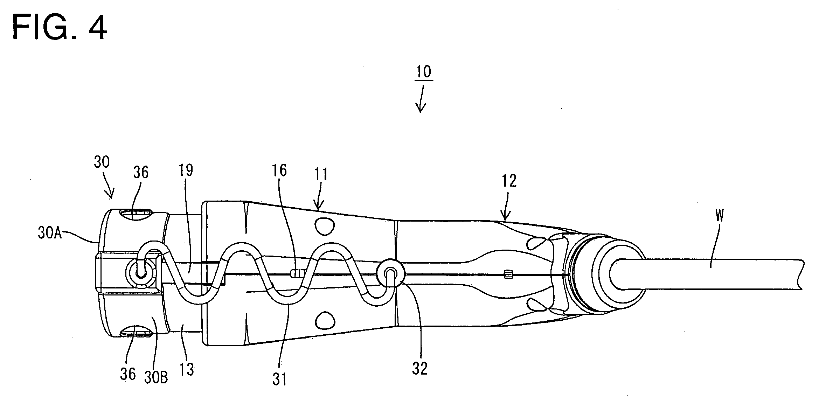

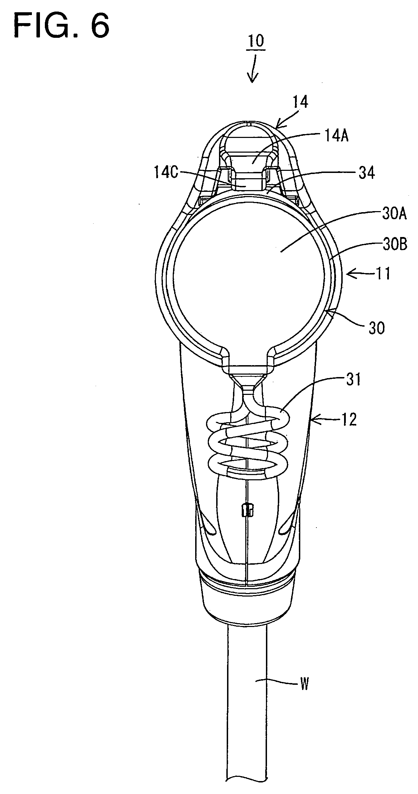

As shown in FIG. 4 or 6, the rubber string 31 substantially is wavy or spiral-shaped with the protection cap 30 mounted on the connecting portion 13. As a result, as shown in FIG. 1, the hanging down of the rubber string 31 from the connector main body 11 is maximally suppressed and the rubber string 31 is arranged near the connector main body 11. This is to prevent the charging connector 10 from being lifted by mistakenly holding the rubber string 31 in starting a charging operation.

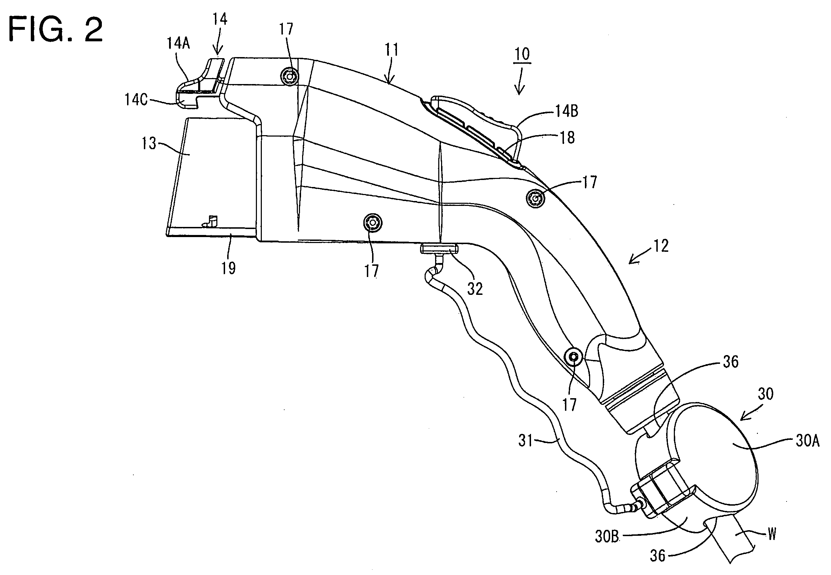

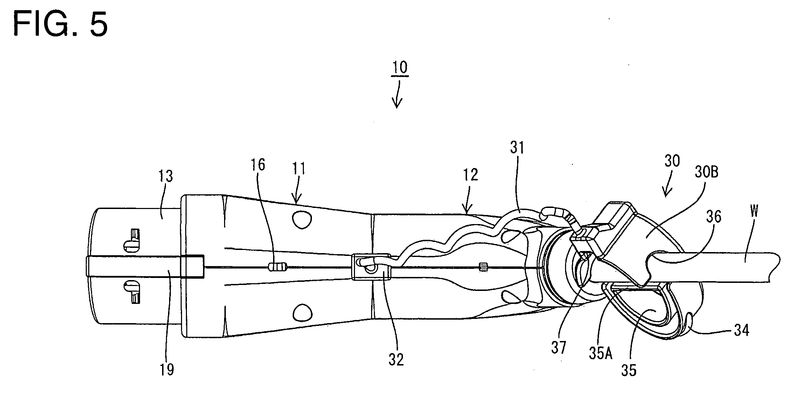

In starting the charging operation, the protection cap 30 is removed to expose the connecting portion 13 to the outside. If the protection cap 30 is left to hang down from the connector main body 11 at this time, the protection cap 30 may damage a vehicle body, such as by coming into contact with the vehicle body. Thus, in this embodiment, the protection cap 30 removed from the connecting portion 13 is to be attached to the cable W of the charging connector 10 as shown in FIG. 2 or 5. By doing so, the contact of the protection cap 30 with the vehicle body can be prevented. Note that the rubber string 31 is at least partly stretched near the grip 12 in a state where the protection cap 30 is attached to the cable W.

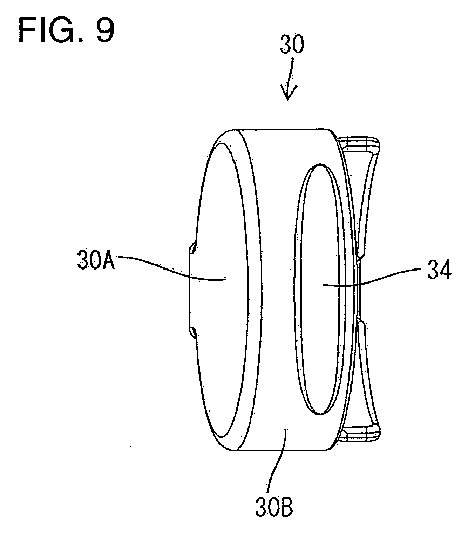

As shown in FIGS. 9 to 14, the protection cap 30 includes a (particularly substantially tubular or circular) facing wall 30A and a peripheral wall 30B extending from (particularly the peripheral edge of) this facing wall 30A. The facing wall 30A is arranged while being somewhat inclined with respect to a mounting direction MD of the connecting portion 13 and the protection cap 30 as shown in FIG. 3. Accordingly, the upper side of the peripheral wall 30B is shorter than the lower side thereof in forward and backward directions (or along the mounting direction MD). Further, at least one locking projection 34 for holding the protection cap 30 onto the connecting portion 13 by being engaged with the claw portion 14C of the lock portion 14A from behind projects outward or upward from the outer or upper surface of the peripheral wall 30B. This locking projection 34 particularly substantially has an elliptical shape long in a circumferential direction of the peripheral wall 30B as shown in FIG. 9.

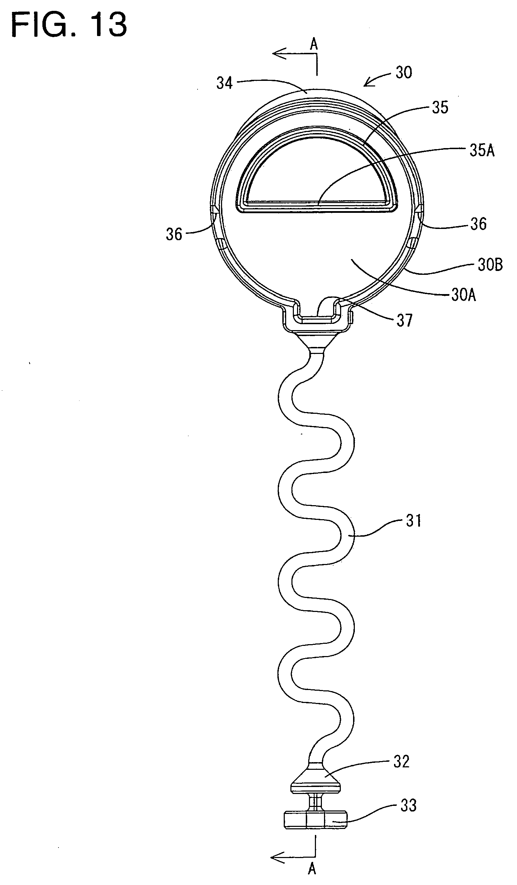

As shown in FIG. 3, the facing wall 30A is arranged to substantially close a front end opening of the receptacle 13A by facing toward the connecting portion 13 in forward and backward directions (mounting direction MD), and the leading end of the receptacle 13A particularly substantially is in contact with a facing surface of the facing wall 30A facing the connecting portion 13. On the other hand, the peripheral wall 30B substantially extends backward along the outer circumferential surface of the receptacle 13A of the connecting portion 13. A (particularly substantially semicircular) separation wall 35 substantially extends backward from the facing surface of the facing wall 30A as shown in FIG. 13. As shown in FIG. 3, the separation wall 35 is arranged to at least partly cover the terminal fitting 20 particularly in the upper or first row over the entire circumference. A substantially straight part 35A of this separation wall 35 is at least partly inserted between the terminal fitting 20 in the upper or first row and that in the lower or second row, whereby the upper or first and lower or second terminal fittings 20 are held electrically insulated. Note that the height of the straight part 35A is so set that the upper or first and lower or second terminal fittings 20 can be held electrically insulated and the straight part 35A can be engaged with the cable W.

Note that a positioning groove 37 is formed to extend in forward and backward directions (or along the mounting direction MD) in the protection cap 30 as shown in FIG. 13. This positioning groove 37 is recessed outward or downward from (particularly a bottom end portion of) the peripheral wall 30B and can at least partly receive a positioning rib 19 projecting from (particularly a bottom end portion of) the receptacle 13A of the connecting portion 13. The protection cap 30 is or can be circumferentially positioned with respect to the connecting portion 13 by engaging the positioning rib 19 with the positioning groove 37.

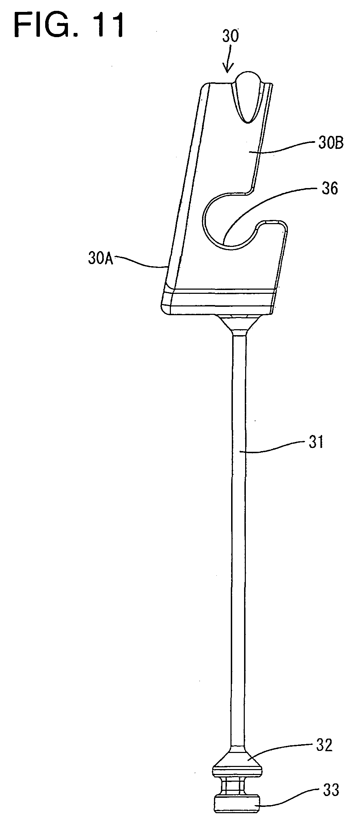

As shown in FIG. 11, a pair of mounting grooves 36 are formed in the opposite side surfaces of the peripheral wall 30B. These mounting grooves 36 are formed by cutting the peripheral wall 30B substantially in an arcuate manner from an end edge of the peripheral wall 30B toward the facing wall 30A, and parts of the peripheral wall 30B below the mounting grooves 36 project more backward than parts of the peripheral wall 30B above the mounting grooves 36. Each mounting groove 36 surrounds or can surround the cable W over more than about half the circumference (e.g. about 3/4 of the circumference in this embodiment). Thus, when the cable W is mounted in the mounting grooves 36, the cable W is surrounded over more than about half the circumference by the mounting grooves 36 and the protection cap 30 is or can be attached while being hooked onto the cable W as shown in FIG. 5. Further, the straight part 35A of the separation wall 35 is arranged substantially along the cable W extending between the both mounting grooves 36, and the protection cap 30 can be hooked onto the cable W by tight holding of the cable W by the both mounting grooves 36 and the contact of the cable W with the straight part 35A of the separation wall 35. Therefore, the protection cap 30 can be more strongly attached to the cable W.

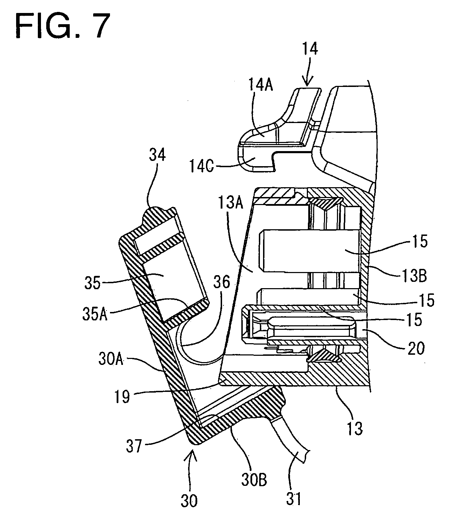

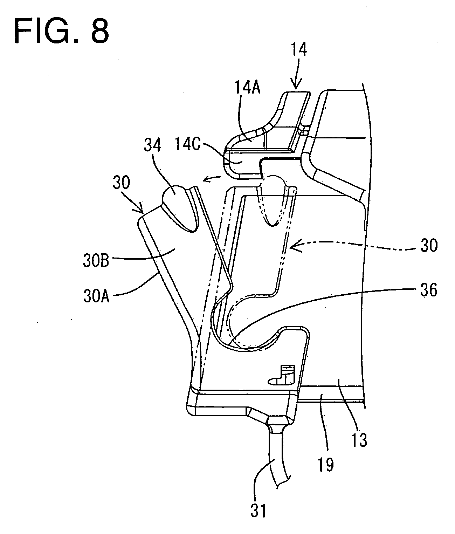

In mounting the protection cap 30 on the connecting portion 13, a mounting operation is performed by placing the lower side of the peripheral wall 30B of the protection cap 30 on the lower side of the receptacle 13A of the connecting portion 13 as shown in FIG. 7. Further, since a dimension of the upper side of the peripheral wall 30B in forward and backward directions (or along the mounting direction MD) is smaller than a dimension of the lower side thereof in forward and backward directions, the upper side of the peripheral wall 30B is less likely to interfere with the claw portion 14C, whereby it can be suppressed to make mounting of the protection cap 30 on the connecting portion 13 difficult, when the lower side of the connecting portion 13 is held in contact with the lower side of the peripheral wall 30B with the protection cap 30 inclined and the protection cap 30 is mounted on the connecting portion 13 by being rotated upward about this contact part. On the other hand, in removing the protection cap 30 from the connecting portion 13, the upper side of the protection cap 30 above the mounting grooves 36 is or can be pulled apart from the connecting portion 13 to perform a removing operation as shown in FIG. 8. By this removing operation, parts of the protection cap 30 between the peripheral edges of the mounting grooves 36 and the facing wall 30A are resiliently deformed to widen opening parts of the mounting grooves 36.

As described above, in this embodiment, the protection cap 30 can be attached to the cable W by at least partly fitting the mounting grooves 36 of the protection cap 30 to the cable W. Accordingly, it is not necessary to provide the connector main body 11 or the grip 12 with an attaching porting used to attach the protection cap 30 and enlarge the charging connector 10. Further, by attaching this protection cap 30 to the cable W after the protection cap 30 is removed from the connecting portion 13, the vehicle body can be prevented from being damaged, such as by the contact of the protection cap 30 therewith.

Further, since the protection cap 30 particularly can be hooked onto the cable W by the contact of the cable W substantially along the straight part 35A of the separation wall 35 at least partly inserted between the terminal fitting 20 in the upper or first row and that in the lower or second row, attachment strength to the cable W can be increased as compared with the case where the cable W is received only by being tightly held at the both mounting grooves 36. Furthermore, since the upper parts of the mounting grooves 36 in the protection cap 30 are reinforced by the separation wall 35, only the facing wall 30A adjacent to the mounting grooves 36 can be bent while the mounting grooves 36 are deformed to be widened without resiliently deforming the upper parts.

Since the straight part 35A of the separation wall 35 that separates the terminal fitting 20 in the upper or first row as the power supply terminal and the terminal fitting 20 in the lower or second row as the signal terminal substantially is arranged along the cable W, the protection cap 30 can also be supported by bringing this straight part 35A into contact with the cable W.

Accordingly, to enable mounting of a protection cap without enlarging a charging connector. a charging connector 10 is provided which is to be connected to a vehicle-side connector provided in a vehicle to provide current or power to circuit(s) mounted thereon, e.g. to charge a battery installed in the vehicle. The charging connector 10 includes a connector main body 11 with a connecting portion 13 connectable to the vehicle-side connector, a protection cap 30 made of an insulating material and to be mounted on the connecting portion 13 separated from the vehicle-side connector, and a cable W drawn out from the interior of the connector main body 11 to be connected to a power supply. The protection cap 30 is to be removed from the connecting portion 13 and attached to the cable W in connecting the connecting portion 13 to the vehicle-side connector.

### <First Comparative Example>

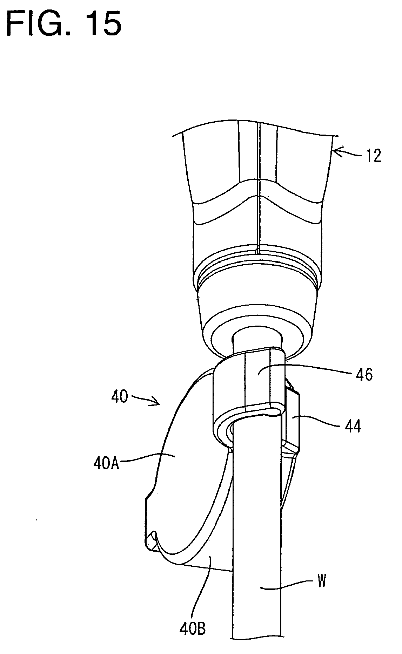

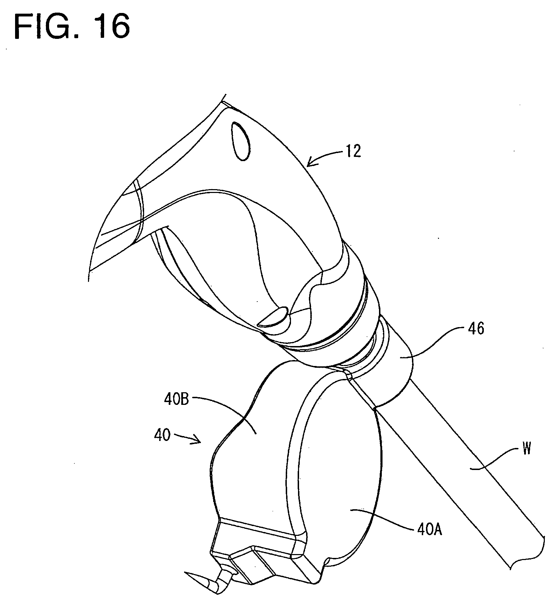

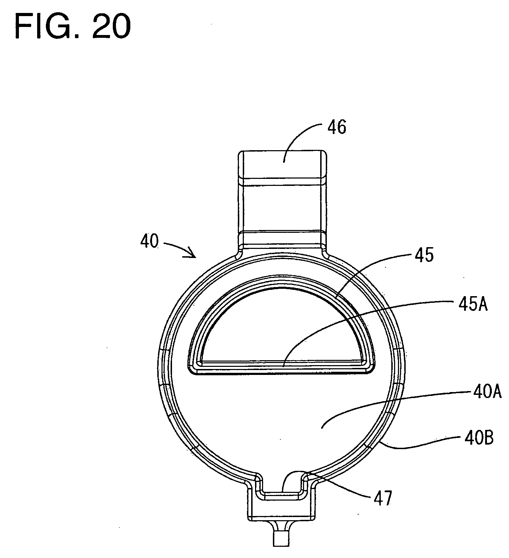

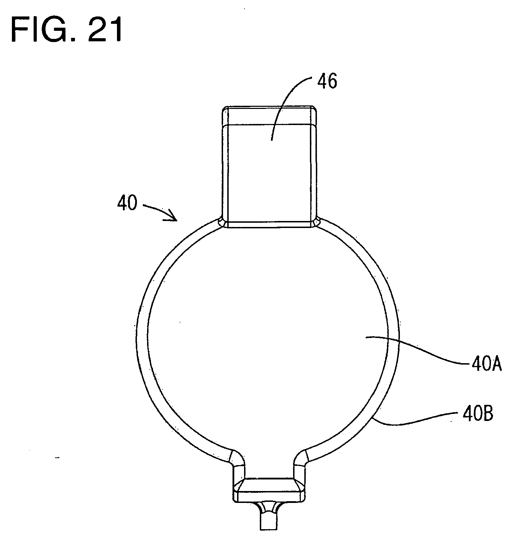

Next, a first comparative example is described with reference to FIGS. 15 to 21. This first comparative example is achieved by partly changing the construction of the protection cap 30 in the first embodiment and the other constructions are same or similar. Accordingly, the same or similar constructions as in the first embodiment are identified by the same reference numerals and the same or similar constructions, functions and effects as in the first embodiment are not described to avoid repetitive description. Further, the same or similar constructions as the protection cap 30 of the first embodiment are identified by reference numerals, the tens digit of which is changed from 3 to 4.

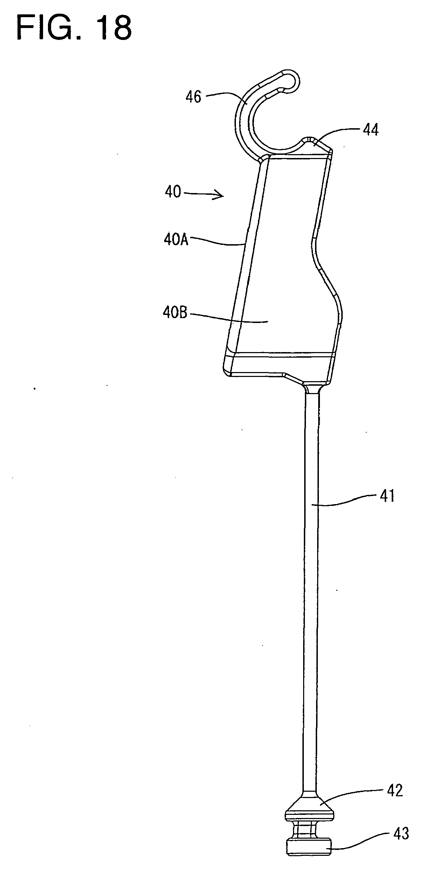

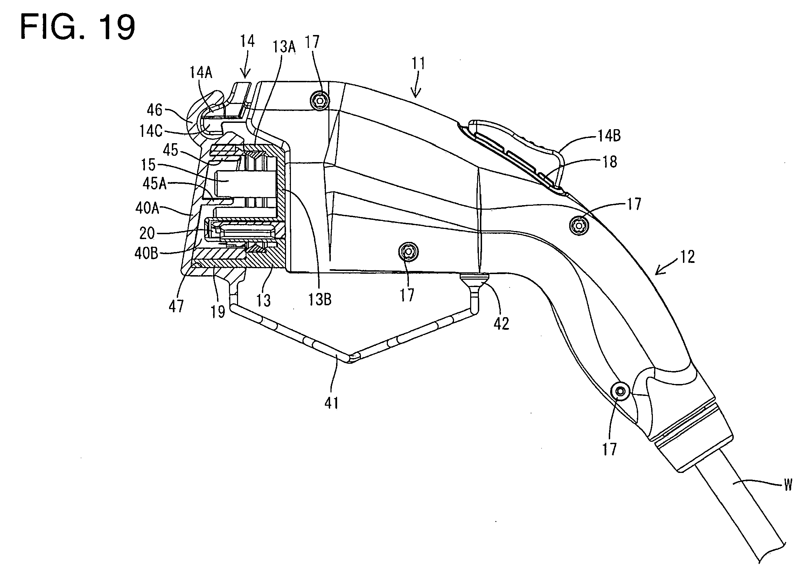

In a protection cap 40 of this first comparative example, the mounting grooves 36 are not provided in a peripheral wall 40B and, instead, a hook-shaped catching portion 46 stands up or projects from (particularly the upper edge of) a facing wall 40A as shown in FIG. 18. This catching portion 46 has an arcuate or bent shape and is folded backward from (particularly the upper edge of) the facing wall 40A. Thus, when the protection cap 40 is mounted on the connecting portion 13, the catching portion 46 is arranged to at least partly cover the claw portion 14C of the lock portion 14A as shown in FIG. 19. In this way, the lock portion 14A is protected from the outside by the catching portion 46.

In attaching the protection cap 40 to the cable W, the protection cap 40 is so fixed to the cable W as to wind the catching portion 46 around the cable W as shown in FIG. 15. That is, the catching portion 46 is formed to surround the cable W over more than about half the circumference and/or the leading end of the catching portion 46 projects radially inwardly and is formed to be somewhat thicker. Further, a distance between the leading end of the catching portion 46 and the projecting end of a locking projection 44 particularly is set to be smaller than the diameter of the cable W. Thus, the catching portion 46 is held hooked or snapped onto the cable W and the protection cap 40 is attached to the cable W.

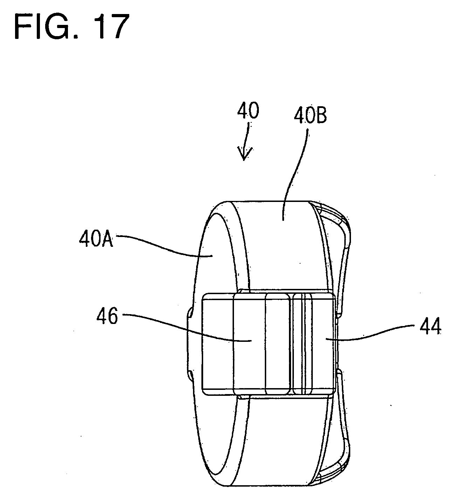

Note that, as shown in FIG. 17, the locking projection 44 particularly is formed to have the same width as the catching portion 46, particularly is smaller than the locking projection 34 of the first embodiment in a width direction and/or parallel to the leading end of the catching portion 46.

As described above, in this first comparative example, the catching portion 46 can be used both as an attaching portion to the cable W and as a protecting portion for the lock portion 14A since the catching portion 46 protects the lock portion 14A by mounting the protection cap 40 on the connecting portion 13.

### < Second Comparative Example>

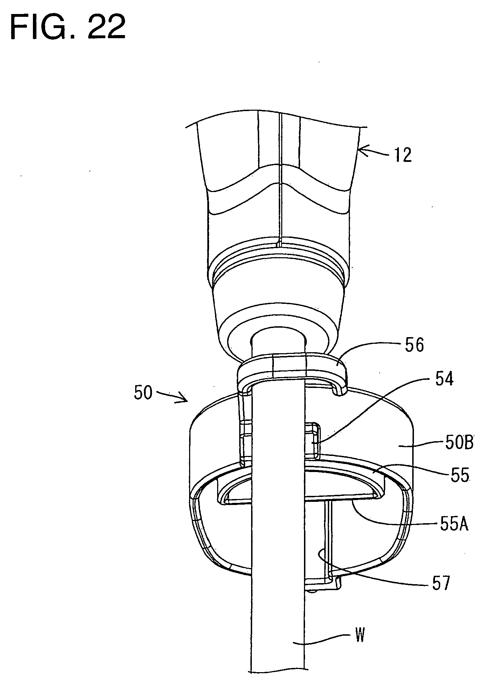

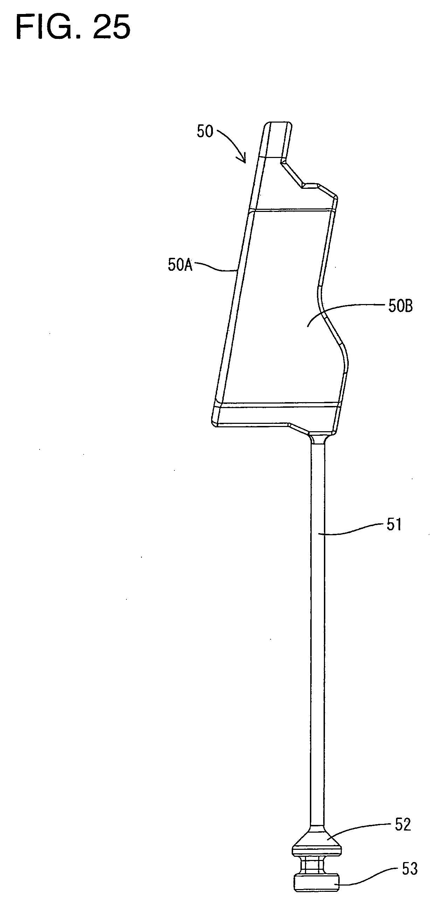

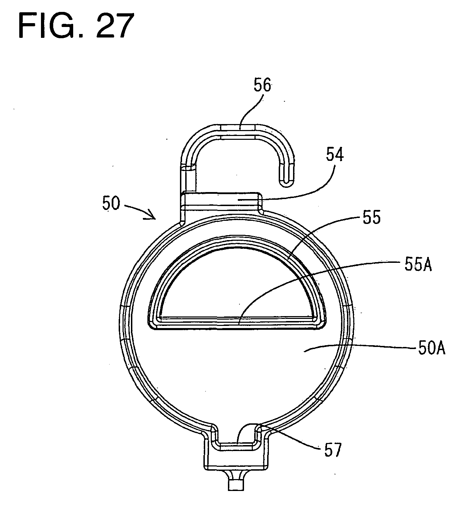

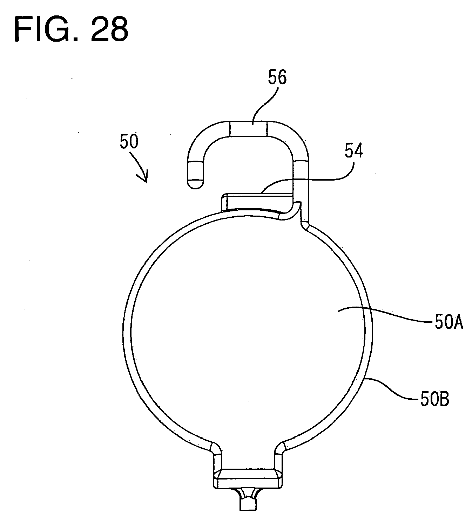

Next, a second comparative example is described with reference to FIGS. 22 to 28. A protection cap 50 of this second comparative example is obtained by partly changing the construction of the protection cap 30 in the first embodiment similar to the protection cap 40 of the first comparative example and the other constructions are same or similar. Accordingly, the same or similar constructions as in the first embodiment are identified by the same reference numerals and the same or similar constructions, functions and effects as in the first embodiment are not described to avoid repetitive description. Further, the same or similar constructions as the protection cap 30 of the first embodiment are identified by reference numerals, the tens digit of which is changed from 3 to 5.

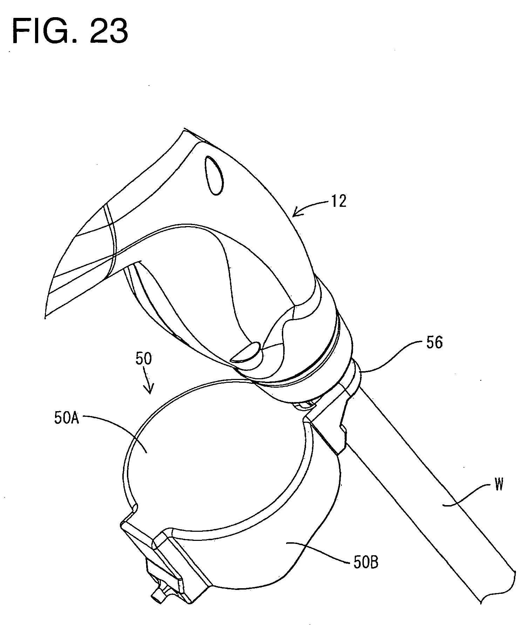

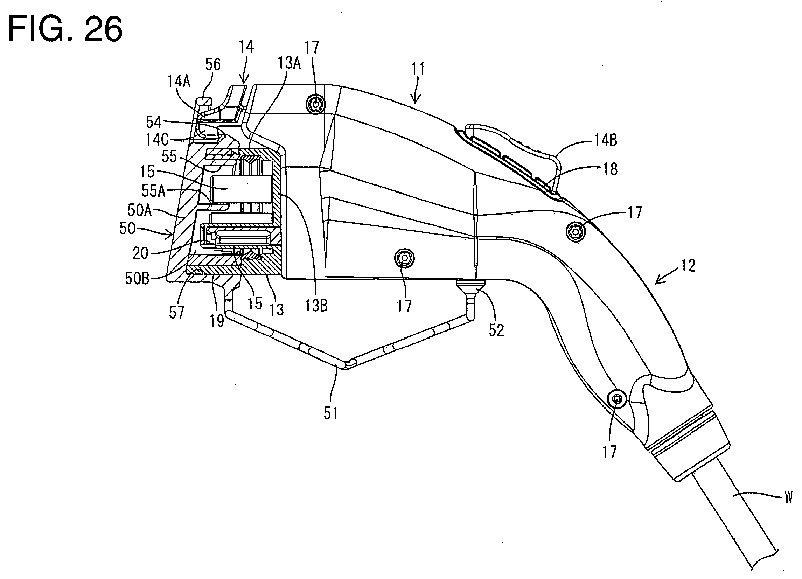

In the protection cap 50 of this second comparative example, the mounting grooves 36 are not provided in a peripheral wall 50B and, instead, a hook-shaped catching portion 56 stands up or projects from (particularly the upper edge of) a facing wall 50A as shown in FIGS. 22 and 23. This catching portion 56 substantially extends in a circumferential direction of a peripheral wall 50B after standing up or projecting from (particularly the upper end of) the peripheral wall 50B. Further, when the protection cap 50 is mounted on the connecting portion 13, the catching portion 56 is arranged to at least partly cover the claw portion 14C of the lock portion 14A as shown in FIG. 26. In this way, the lock portion 14A is protected from the outside by the catching portion 56.

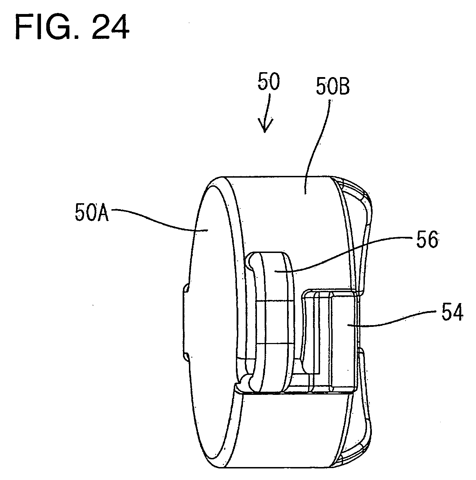

A distance between the leading end of the catching portion 56 and the peripheral wall 50B particularly is set to be smaller than the diameter of the cable W. Thus, the catching portion 56 is or can be held hooked or snapped onto the cable W and the protection cap 50 is or can be attached to the cable W. Note that the catching portion 56 is set to be about half or less of the diameter (dimension in forward and backward directions) of the peripheral wall 50B and arranged before the locking projection 54 so as not to vertically overlap the locking projection 54 as shown in FIG. 24.

As described above, in this second comparative example, the catching portion 56 can be used both as the attaching portion to the cable W and as the protecting portion for the lock portion 14A as in the first comparative example and, in addition, the catching portion 56 can be formed to be smaller than the catching portion 46 of the first comparative example. Thus, the protection cap 50 can be made smaller than the protection cap 40 of the first comparative example.

### <Second Embodiment>

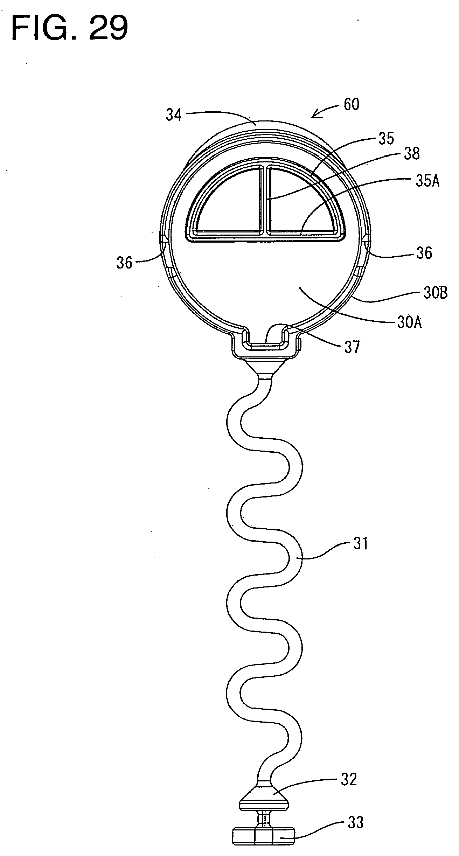

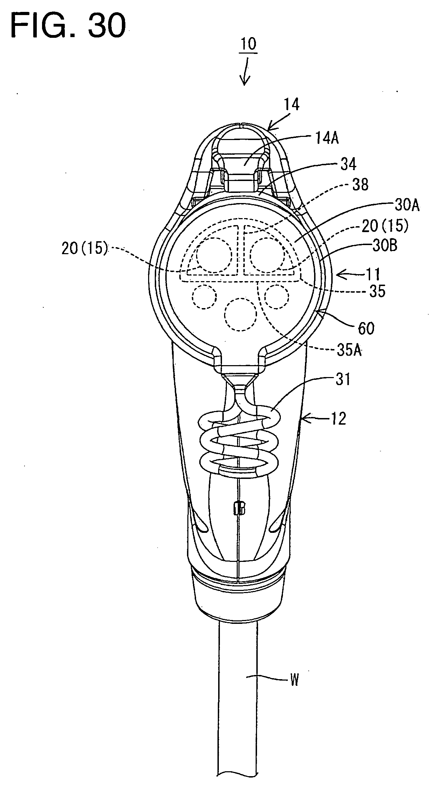

Next, a second particular embodiment of the present invention is described with reference to FIGS. 29 and 30. Note that the same or similar constructions as in the first embodiment are identified by the same reference numerals in the following description.

A protection cap 60 of this embodiment is obtained by adding at least one intermediate wall 38 in the separation wall 35 of the protection cap 30 of the first embodiment, and a pair of terminal fittings 20 located in an upper or first row are separated while being electrically insulated from each other by this intermediate wall 38. That is, the terminal fittings 20 in the upper or first row are both power supply terminals and can be connected to a household AC power supply. Production of sparks between the two terminals can be prevented by the intermediate wall 38. Further, by at least partly inserting the intermediate wall 38 between the two terminal fittings 20 located in the upper or first row, the protection cap 60 can be positioned in a rotating direction along the peripheral wall 30B.

### <Other Embodiments>

The present invention is not limited to the above described and illustrated embodiments. For example, the following embodiments are also included in the technical scope of the present invention.
(1) Although the protection cap is connected to the connector main body 11 via the rubber string 31 in the above embodiments, the protection cap and the connector main body 11 may be separate members without providing any rubber string according to the present invention.
(2) Although the mounting grooves for tightly holding the cable W and the catching portion to be hooked onto the cable W are illustrated in the above embodiments, the protection cap may be attached to the cable W using a magnet or the like according to the present invention.
(3) Although the protection cap made of flexible elastomer is illustrated in the above embodiments, a protection cap made of synthetic resin may be used, i.e. it does not matter which material is used according to the present invention.
(4) Although the semicircular separation wall 35 is illustrated in the first to third embodiments, a separation wall composed only of a straight part may be provided according to the present invention. In this case, the length of the straight part is preferably so set that the opposite ends thereof are arranged near the two mounting grooves 36. Further, the separation wall may be so formed that the straight part and the arcuate or bent part are or may be at different heights.

### LIST OF REFERENCE NUMERALS

10 ... charging connector
11 ... connector main body (case body)
12 ... grip (case body)
13 ... connecting portion
14A ... lock portion
20 ... terminal fitting (power supply terminal, another terminal)
30,40,50 ... protection cap
30A, 40A, 50A ... facing wall
30B, 40B, 50B ... peripheral wall
35,45,55 ... separation wall
36 ... mounting groove
46, 56... catching portion (protecting portion)
W ... cable

## Claims

1. A charging connector (10) which is to be connected in a mounting direction (MD) to a vehicle-side connector provided in a vehicle to provide current particularly for charging a battery installed in the vehicle, comprising:
a case body (11; 12) with a connecting portion (13) connectable to the vehicle-side connector;
a protection cap (30; 60) made of an insulating material and mountable on the connecting portion (13) disconnected from the vehicle-side connector; and
a cable (W) drawn out from the interior of the case body (11; 12) to be connected to a power supply,
wherein the protection cap (30; 60) is removable from the connecting portion (13) and attachable to the cable (W) when connecting the connecting portion (13) to the vehicle-side connector, wherein the protection cap (30; 60) includes a facing wall (30A) and a peripheral wall (30B) extending from the facing wall (30A),
wherein when the protection cap (30) is mounted on the charging connector (10), the facing wall (30A) is facing and covering the connecting portion (13) and the peripheral wall (30B) extends from the facing wall (30A) opposite to the mounting direction (MD) along the outer surface of the connecting portion (13),
**characterized in that**
an end edge of the peripheral wall (30B) is cut off to form at least one mounting groove (36); and
the mounting groove (36) is formed to surround the cable (W) over more than about half the circumference while being attached to the cable (W).

2. A charging connector according to claim 1, wherein:
the connecting portion (13) includes a power supply terminal (20) for supplying power and the protection cap (30; 60) includes at least one separation wall (35; 38) extending from a facing surface of the facing wall (30A) substantially opposite to the mounting direction (MD) to separate the power supply terminal (20) from another terminal.

3. A charging connector according to claim 2, wherein the peripheral wall (30B) is formed with a pair of mounting grooves (36) substantially facing each other; and
the separation wall (35) extends along the cable (W) mounted between the pair of mounting grooves (36).

4. A charging connector according to claim 2 or 3, wherein parts of the mounting grooves (36) in the protection cap (30) are reinforced by a straight part (35A) of the separation wall (35).

5. A charging connector according to any one of the preceding claims, wherein during a removing operation, parts of the protection cap (30) between peripheral edges of the mounting grooves (36) and the facing wall (30A) are resiliently deformed to widen opening parts of the mounting grooves (36).

6. A charging connector according to any one of the preceding claims, further comprising a lock portion (14A) for locking the vehicle-side connector and the connecting portion (13) in a connected state.

7. A charging connector according to any one of the preceding claims, wherein a dimension of a first side of the peripheral wall (30B) along the mounting direction (MD) is smaller than a dimension of a second side thereof along the mounting direction (MD).

8. A charging connector according to any one of the preceding claims, wherein two terminal fittings (20) are provided as power supply terminals and the cap (60) comprises an intermediate wall (38) to be at least partly inserted between the two power supply terminal fittings (20).

9. A method of mounting a charging connector (10) to a vehicle-side connector provided in a vehicle to provide current particularly for charging a battery installed in the vehicle, comprising the following steps:
mounting a protection cap (30; 60) made of an insulating material on a connecting portion (13) of a case body (11; 12) when separated from the vehicle-side connector; and
before or when connecting the connecting portion (13) to the vehicle-side connector in a mounting direction (MD), removing the protection cap (30; 60) from the connecting portion (13) and attaching the protection cap (30; 60) to a cable (W) drawn out from the interior of the case body (11; 12) to be connected to a power supply;
wherein the protection cap (30; 60) includes a facing wall (30A) and a peripheral wall (30B) extending from the facing wall (30A),
wherein when the protection cap (30) is mounted on the charging connector (10), the facing wall (30A) is facing and covering the connecting portion (13) and the peripheral wall (30B) extends from the facing wall (30A) opposite to the mounting direction (MD) along the outer surface of the connecting portion (13),
**characterized by**
cutting off an end edge of the peripheral wall (30B) so as to form at least one mounting groove (36); and
forming the mounting groove (36) so as to surround the cable (W) over more than about half the circumference.

## Patentansprüche

1. Ein Ladestecker (10), der in einer Montagerichtung (MD) an einen fahrzeugseitigen Stecker anzuschließen ist, der in einem Fahrzeug bereitgestellt wird, um Strom zu liefern insbesondere, um eine Batterie zu laden, die im Fahrzeug installiert ist, und der das Folgende umfasst:
einen Gehäusekörper (11; 12) mit einem Anschlussabschnitt (13), der an einen fahrzeugseitigen Stecker anschließbar ist;
eine Schutzkappe (30; 60), die aus einem isolierenden Material gefertigt ist und die an den vom fahrzeugseitigen Stecker abgekoppelten Anschlussabschnitt (13) montierbar ist; und
ein Kabel (W), das aus dem Innenraum des Gehäusekörpers (11; 12) herausgeführt wird (*drawn out),* um an eine Energiequelle angeschlossen zu werden,
wobei die Schutzkappe (30; 60) vom Anschlussabschnitt (13) entfernt werden kann und am Kabel (W) anfügbar ist, wenn der Anschlussabschnitt (13) an den fahrzeugseitigen Stecker angeschlossen wird, wobei die Schutzkappe (30; 60) eine Stirnwand (30A) und eine periphere Wand (30B) beinhaltet, die von der Stirnwand (30A) ausgeht,
wobei die Schutzkappe (30) auf dem Ladestecker (10) montiert wird, die Stirnwand (30A) zum Anschlussabschnitt (13) hin gewandt ist und diesen abdeckt, und die periphere Wand (30B) sich ausgehend von der Stirnwand (30A) entgegen der Montagerichtung (MD) entlang der Außenfläche des Anschlussabschnitts (13) erstreckt,
**dadurch gekennzeichnet, dass**
eine Endkante der peripheren Wand (30B) abgetrennt wird, um mindestens eine Montagenut (36) zu bilden; und dass
die Montagenut (36) gebildet wird, um das Kabel (W) über mehr als mindestens etwa den halben Umfang zu umgeben, während sie am Kabel (W) angebracht ist.

2. Ein Ladestecker nach Anspruch 1, wobei:
der Anschlussabschnitt (13) zur Stromversorgung einen Stromversorgungsanschluss (20) beinhaltet und wobei die Schutzkappe (30; 60) mindestens eine Trennwand (35; 38) beinhaltet, die von einer Stirnfläche der Stirnwand (30A) im Wesentlichen entgegen der Montagerichtung (MD) ausgeht, um den Stromversorgungsanschluss (20) von einem anderen Anschluss zu trennen.

3. Ein Ladestecker nach Anspruch 2, wobei die periphere Wand (30B) mit einem Paar von Montagenuten (36) gebildet wird, die einander im Wesentlichen zugewandt sind; und die Trennwand (35) entlang des Kabels (W) verläuft, das zwischen dem Paar von Montagenuten (36) montiert ist.

4. Ein Ladestecker nach Anspruch 2 oder 3, wobei Teile der Montagenuten (36) in der Schutzkappe (30) durch ein gerades Teil (35A) der Trennwand (35) verstärkt werden.

5. Ein Ladestecker nach irgendeinem der vorhergehenden Ansprüche, wobei während einer Entfernungsoperation Teile der Schutzkappe (30) zwischen peripheren Kanten der Montagenuten (36), und die Stirnwand (30A) elastisch verformt werden, um Öffnungsteile der Montagenuten (36) auszuweiten.

6. Ein Ladestecker nach irgendeinem der vorhergehenden Ansprüche, der des Weiteren, zur Verriegelung des fahrzeugseitigen Steckers und des Anschlussabschnitts (13) im verbundenen Zustand, einen Verriegelungsabschnitt (14A) umfasst.

7. Ein Ladestecker nach irgendeinem der vorhergehenden Ansprüche, wobei eine Abmessung einer ersten Seite der peripheren Wand (30B) entlang der Montagerichtung (MD) kleiner als eine Abmessung einer zweiten Seite davon entlang der Montagerichtung (MD).

8. Ein Ladestecker nach irgendeinem der vorhergehenden Ansprüche, wobei zwei Anschlusspassstücke (20) als Stromversorgungsanschlüsse bereitgestellt werden und wobei die Kappe (60) eine Zwischenwand (38) umfasst, die zumindest teilweise zwischen den beiden Stromversorgungs-Anschlusspassstücken (20) einzufügen ist.

9. Ein Verfahren zur Montage eines Ladesteckers (10) an einen fahrzeugseitigen Stecker, der in einem Fahrzeug bereitgestellt wird, um Strom zu liefern insbesondere, um eine Batterie zu laden, die im Fahrzeug installiert ist, wobei das Verfahren das Folgende umfasst:
montieren einer Schutzkappe (30; 60), die aus einem isolierenden Material gefertigt ist, an einen vom fahrzeugseitigen Stecker abgekoppelten Anschlussabschnitt (13) des Gehäusekörpers (11; 12); und
bevor oder wenn der Anschlussabschnitt (13) an einen fahrzeugseitigen Stecker in einer Montagerichtung (MD) angeschlossen wird, entfernen der Schutzkappe (30; 60) vom Anschlussabschnitt (13) und anbringen der Schutzkappe (30; 60) an ein Kabel (W), das aus dem Innenraum des Gehäusekörpers (11; 12) herausgeführt wird, um an eine Energiequelle angeschlossen zu werden;
wobei die Schutzkappe (30; 60) eine Stirnwand (30A) und eine periphere Wand (30B) beinhaltet, die von der Stirnwand (30A) ausgeht,
wobei die Schutzkappe (30) auf dem Ladestecker (10) montiert wird, die Stirnwand (30A) zum Anschlussabschnitt (13) hin gewandt ist und diesen abdeckt, und die periphere Wand (30B) sich ausgehend von der Stirnwand (30A) entgegen der Montagerichtung (MD) entlang der Außenfläche des Anschlussabschnitts (13) erstreckt,
**gekennzeichnet durch**
das Abtrennen einer Endkante der peripheren Wand (30B), sodass mindestens eine Montagenut (36) gebildet wird; und
das Bilden der Montagenut (36), sodass das Kabel (W) über mehr als mindestens etwa den halben Umfang umgeben ist.

## Revendications

1. Un connecteur de chargement (10) qui est à connecter dans une direction de montage (MD) à un connecteur côté véhicule fourni dans un véhicule pour fournir du courant notamment pour charger une batterie installée dans un véhicule, comprenant :
un corps de boîtier (11 ; 12) avec une portion de connexion (13) pouvant être connectée au connecteur côté véhicule ;
un capuchon de protection (30 ; 60) qui est réalisé dans un matériau isolant et qui peut être monté sur la portion de connexion (13) déconnectée du connecteur côté véhicule ; et
un câble (W) extrait ou encore guidé hors (*drawn out*) de l'intérieur du corps de boîtier (11 ; 12) pour être connecté à une source d'énergie,
sachant que le capuchon de protection (30 ; 60) peut être enlevé de la portion de connexion (13) et attaché au câble (W) quand la portion de connexion (13) est connectée au connecteur côté véhicule, sachant que le capuchon de protection (30 ; 60) inclut une paroi frontale (30A) et une paroi périphérique (30B) qui s'étend de la paroi frontale (30A),
sachant que quand le capuchon de protection (30) est monté sur le connecteur de chargement (10), la paroi frontale (30A) fait face et recouvre la portion de connexion (13) et la paroi périphérique (30B) s'étend de la paroi frontale (30A) dans la direction opposée à la direction de montage (MD) le long de la surface extérieure de la portion de connexion (13),
**caractérisé en ce que**
un bord terminal de la paroi périphérique (30B) est découpé pour former au moins une rainure de montage (36) ; et que
la rainure de montage (36) est formée pour entourer le câble (W) par plus d'à peu près une demi circonférence en étant attachée au câble (W).

2. Un connecteur de chargement d'après la revendication 1, sachant que :
la portion de connexion (13) inclut une borne d'alimentation en énergie (20) servant à fournir l'énergie nécessaire et que le capuchon de protection (30 ; 60) inclut au moins une paroi de séparation (35 ; 38) qui s'étend à partir d'une surface frontale de la paroi frontale (30A) essentiellement opposée à la direction de montage (MD) pour séparer la borne d'alimentation en énergie (20) d'une autre borne.

3. Un connecteur de chargement d'après la revendication 2, sachant que la paroi périphérique (30B) est formée avec une paire de renfoncements de montage (36) se faisant face essentiellement ; et que
la paroi de séparation (35) s'étend le long du câble (W) monté entre la paire de renfoncements de montage (36).

4. Un connecteur de chargement d'après la revendication 2 ou 3, sachant que des parties des renfoncements de montage (36) dans le capuchon de protection (30) sont renforcées par une partie rectiligne (35A) de la paroi de séparation (35).

5. Un connecteur de chargement d'après une quelconque des revendications précédentes, sachant que pendant une opération d'enlèvement des parties du capuchon de protection (30), entre des bords périphériques des renfoncements de montage (36) et la face frontale (30A) sont élastiquement déformées pour élargir des parties d'ouverture des renfoncements de montage (36).

6. Un connecteur de chargement d'après une quelconque des revendications précédentes, comprenant en outre une portion de verrouillage (14A) pour verrouiller le connecteur côté véhicule et la portion de connexion (13) dans un état connecté.

7. Un connecteur de chargement d'après une quelconque des revendications précédentes, sachant qu'une taille d'un premier côté de la paroi périphérique (30B) le long de la direction de montage (MD) est inférieure à une taille d'un deuxième côté de celle-ci le long de la direction de montage (MD).

8. Un connecteur de chargement d'après une quelconque des revendications précédentes, sachant que deux raccords de borne (20) sont fournis en tant que bornes d'alimentation en énergie et que le capuchon (60) comprend une paroi intermédiaire (38) qui est à insérer au moins partiellement entre les deux raccords de borne (20) d'alimentation en énergie.

9. Un procédé pour monter un connecteur de chargement (10) à un connecteur côté véhicule fourni dans un véhicule pour fournir du courant notamment pour charger une batterie installée dans un véhicule, comprenant les étapes suivantes consistant à :
monter un capuchon de protection (30 ; 60) qui est réalisé dans un matériau isolant sur une portion de connexion (13) du corps de boîtier (11 ; 12) quand celle-ci est déconnectée du connecteur côté véhicule ; et
avant ou au moment de la connexion de la portion de connexion (13) au connecteur côté véhicule dans une direction de montage (MD), enlever le capuchon de protection (30 ; 60) de la portion de connexion (13) et attacher le capuchon de protection (30 ; 60) au câble (W) extrait ou encore guidé hors (*drawn out*) de l'intérieur du corps de boîtier (11 ; 12) pour être connecté à une source d'énergie ;
sachant que le capuchon de protection (30 ; 60) inclut une paroi frontale (30A) et une paroi périphérique (30B) qui s'étend de la paroi frontale (30A),
sachant que quand le capuchon de protection (30) est monté sur le connecteur de chargement (10), la paroi frontale (30A) fait face et recouvre la portion de connexion (13) et la paroi périphérique (30B) s'étend de la paroi frontale (30A) dans la direction opposée à la direction de montage (MD) le long de la surface extérieure de la portion de connexion (13),
**caractérisé par** le fait de
découper un bord terminal de la paroi périphérique (30B) de manière à former au moins une rainure de montage (36) ; et de
former la rainure de montage (36) de manière à entourer le câble (W) par plus d'à peu près une demi circonférence.
